# EUROPÄISCHE PATENTSCHRIFT

(11) **EP 0 668 496 B1**
(45) Veröffentlichungstag und Bekanntmachung des Hinweises auf die Patenterteilung: **15.09.2004**
(21) Anmeldenummer: 95101904.1
(22) Anmeldetag: 13.02.1995
(51) Int. Cl.: G01N 21/03

(54) **Küvette zur Durchführung optischer Messungen**
Cuvette for performing optical measurements
Cuvette pour mesurage optique

(30) Priorität: 18.02.1994 CH 48994
(43) Veröffentlichungstag der Anmeldung: 23.08.1995
(73) Patentinhaber: F. HOFFMANN-LA ROCHE AG, 4002 Basel (CH)
(72) Erfinder: Koch, Bruno, CH-6330 Cham (CH)
(74) Vertreter: Ventocilla, Abraham

(56) Entgegenhaltungen:
- EP-A- 0 512 368
- DE-A- 4 205 618
- US-A- 3 627 432
- US-A- 5 098 661

## Beschreibung

Die Erfindung betrifft eine Küvette zur Durchführung optischer Messungen in einem automatischen Analysengerät, und insbesondere eine Einzelküvette für ein Analysengerät für klinisch chemische Analysen, welche Küvette
a) ein aus einem lichtdurchlässigen Kunststoff in einem Stück geformtes Teil ist,
b) einen rohrförmigen Körper hat, der zwei planparallele Wände besitzt, und der an einem Ende offen und am entgegengesetzten Ende durch einen Boden geschlossen ist, der die Form eines Halbzylinders hat,
c) der rohrförmige Körper zwei Seitenwände hat, die sich zwischen den planparallelen Wänden erstrecken, welche Seitenwände einen oberen Teil und einen unteren Teil haben, wobei der untere Teil an den Boden angrenzt, und wobei der untere Teil jeder Seitenwand einen äusseren Steg enthält, der sich in länglicher Richtung der Küvette zwischen dem oberen Teil der Seitenwand und einem vom Boden beabstandeten Punkt erstreckt, und
d) jede der planparallelen Wände am offenen Ende des Körpers eine Zunge hat, die unmittelbar an die planparallelen Wände anschliesst, sich vom Rand des offenen Endes nach aussen erstreckt, und senkrecht zu den planparallelen Wänden gerichtet ist, wobei jede Zunge eine Vertiefung besitzt, und die Zungen und ihre Vertiefungen in bezug auf die Längsachse der Küvette zueinander symmetrisch sind.

Im Analysengerät werden solche Küvetten üblicherweise mit Proben und Reagenzien beschickt und eine elektro-optische Analyse des in der Küvette enthaltenen Probe-Reagenz-Gemisches durchgeführt.

Bekannt sind Analysengeräte, bei denen einzelne Reaktions- bzw. Messküvetten verwendet werden, wobei die Küvetten durch eine mechanische, automatisch gesteuerte Transportvorrichtung auf einem passenden Träger im Analysengerät eingesetzt werden. Nach Gebrauch werden die Küvetten aus dem Träger entnommen. Bei diesen Analysengeräten bleibt jede Küvette über die ganze Dauer des Analyseverfahrens auf dem Küvettenträger. Der Transport jeder Küvette zum Küvettenträger bzw. deren Entnahme vom Träger erfolgt daher nur einmal. Das Risiko, dass eine Küvette beim Transport verloren geht, ist deshalb relativ gering.

Bei modernen Analysengeräten, bei denen eine hohe Zahl von Messungen pro Zeiteinheit angestrebt wird, und mit entsprechend kurzen Taktzeiten gearbeitet werden soll, ist es erwünscht, einige Schritte des Analyseverfahrens (z.B. Zugabe von Reagenzien zu einzelnen Küvetten, Durchführung von Mischbewegungen der Küvette, etc.) ausserhalb des Küvettenträgers durchzuführen, und den Küvettenträger vorwiegend zur Durchführung optischer Messungen der in den Küvetten enthaltenen Probe-Reagenz-Gemischen zu benutzen. Dafür muss der Transport jeder Küvette zum Küvettenträger bzw. deren Entnahme vom Träger mehrmals erfolgen. Das Transportsystem muss ausserdem den Transport jeder Küvette zwischen dem Küvettenträger und verschiedenen Bearbeitungsstationen ermöglichen. Hinzu kommt, dass einige Analysensysteme mit drehbaren Küvettenträger arbeiten, und dass es erwünscht sein kann, dass die Transportbewegungen der Küvetten auch bei rotierendem Küvettenträger erfolgen können. Das Risiko, dass eine Küvette bei einem derart flexiblen und mehrmaligen Transport verloren geht, ist daher entsprechend grösser.

Bei vielen Anwendungen darf der Verlust einer Küvette im Analysensystem nicht in Kauf genommen werden. Bei sonst weitgehend automatisierte Analysengeräten würde die Möglichkeit von Küvettenverluste bei deren Transport zumindest eine visuelle Ueberwachung des Küvettentransports während des Betriebs des Analysengeräts notwendig machen, was aus verschiedenen Gründen kaum in Frage kommt.

Eine Küvette der eingangs genannten Art ist in der EP-A- 0 512 368 A2 beschrieben. Versuche mit dieser bekannten Küvette haben gezeigt, dass zur Erzielung von zuverlässigen Messergebnissen bei der Durchführung von elektro-optischen Messungen des Küvetteninhalts eine Verbesserung der optischen Eigenschaften der als Messfenster benutzten Bereiche der planparallelen Seitenwände der Küvette und des Bodens der Küvette, sowie eine Verbesserung der Genauigkeit der Positionierung der Küvette im Analysensystem erforderlich sind,

Der Erfindung liegt daher hauptsächlich die Aufgabe zugrunde, eine Küvette der eingangs angegebenen Art zur Verfügung zu stellen, mit der die oben erwähnten erforderlichen Verbesserungen erzielt werden.

Erfindungsgemäss wird diese Aufgabe mit einer Küvette der eingangs genannten Art gelöst, die dadurch gekennzeichnet ist, dass der Steg auf der Seitenwand, auf deren oberen Teil sich der Anguspunkt der Küvette befindet, länger und breiter als der Steg ist, der auf der gegenüberliegenden Seitenwand liegt.

Ein wesentlicher Vorteil der erfindungsgemässen Küvette gegenüber den im Stand der Technik gemäss der EP-A- 0 512 368 A2 bekannten Küvette liegt darin, dass damit eine Verbesserung der optischen Eigenschaften der als Messfenster benutzten Bereiche der planparallelen Seitenwände der Küvette und des Bodens der Küvette erzielt wird, was zur Erzielung von zuverlässigen Messergebnissen bei der Durchführung von elektro-optischen Messungen des Küvetteninhalts sehr wichtig ist, vor allem wenn sowohl spektralphotometrischen Messungen als auch Fluoreszenz-Polarisationsmessungen des Küvetteninhalts durchgeführt werden.

Eine bevorzugte Ausführungsform des erfindungsgemässen Küvette ist dadurch gekennzeichnet, dass jede Zunge zwei Vertiefungen besitzt, deren Mittelpunkte entlang einer Gerade angeordnet sind, die parallel zur Längsachse des Querschnitts des rohrförmigen Körpers der Küvette liegt. Ein wesentlicher Vorteil dieser bevorzugten Ausführungsform der erfindungsgemässen Küvette gegenüber den im Stand der Technik gemäss der EP-A- 0 512 368 A2 bekannten Küvette liegt darin, dass damit eine Verbesserung der Genauigkeit der Positionierung der Küvette im Analysensystem erzielt wird, was zur Erzielung von zuverlässigen Messergebnissen bei der Durchführung von elektro-optischen Messungen des Küvetteninhalts auch sehr wichtig ist.

Eine bevorzugte Ausführungsform des erfindungsgemässen Küvette ist dadurch gekennzeichnet, dass das Durchmesser jeder Vertiefung annähernd die Hälfte der Abmessung der Zunge in der zu den planparallelen Wänden senkrechten Richtung beträgt.

Eine weitere bevorzugte Ausführungsform der erfindungsgemässen Küvette ist dadurch gekennzeichnet, dass die Tiefe jeder Vertiefung annähernd die Hälfte der Abmessung der Zunge in der zu den planparallelen Wänden parallelen Richtung beträgt.

Eine weitere bevorzugte Ausführungsform des erfindungsgemässen Küvette ist dadurch gekennzeichnet, dass bei jeder Zunge der Bereich zwischen den oberen Ränder ihrer Vertiefungen 21, 41 bzw. 22, 42 und dem äusseren Rand der Zunge eine ebene Fläche enthält, die mit einer zur Längsachse der Küvette senkrechten Ebene einen Winkel von annähernd 45° bildet. Diese Ausführungsform hat den Vorteil, dass durch die besondere Ausbildung der Zungen eine zuverlässigere Zusammenwirkung der Zunge mit einem mechanischen Greifer möglich ist.

Ein Ausführungsbeispiel der Erfindung wird im folgenden anhand der beiliegenden Zeichnungen beschrieben. Es zeigen:
- Fig. 1: eine perspektivische Ansicht einer erfindungsgemässen Küvette,
- Fig. 2: eine erste Seitenansicht der Küvette gemäss Fig.1,
- Fig. 3: eine Draufsicht der Küvette gemäss Fig.1,
- Fig. 4: eine zweite Seitenansicht der Küvette gemäss Fig.1,
- Fig. 5: eine Druntersicht der Küvette gemäss Fig.1,
- Fig. 6: einen Querschnitt durch die Linie A-A in Figur 3,
- Fig. 7: einen Querschnitt durch die Linie B-B in Fig. 3,
- Figuren 8 bis 11: zeigen mit Abmessungen versehenen Ansichten der Küvette gemäss Figuren 1 bis 7.

Die in den beiliegenden Figuren dargestellte Küvette 11 ist ein aus einem lichtdurchlässigen Kunststoff, z.B. aus einer Polymethylmethakrilat-Spritzgussmasse, in einem Stück geformten Teil. Durch ihre nachstehend beschriebene Ausbildung ist diese Küvette zur Durchführung optischer Messungen des Küvetteninhalts geeignet.

Die Küvette 11 hat einen rohrförmigen Körper 12, der zwei planparallelen Wände 13, 14 und zwei Seitenwände 27, 28 besitzt, und der an einem Ende 15 offen und am entgegengesetzten Ende durch einen Boden 16 geschlossen ist. Bei der Durchführung optischer Messungen des Küvetteninhalts verläuft der verwendete Lichtstrahl in der Nähe des Bodens 16 durch die planparallelen Wände 13, 14 und senkrecht dazu. Die planparallelen Wände 13, 14 sind parallel zueinander und zur Längsachse der Küvette 11.

Jede der planparallelen Wände 13, 14 hat am offenen Ende 15 des Körpers eine Zunge 17, 18 hat, die sich vom Rand des offenen Endes 15 nach aussen erstreckt, und die senkrecht zu den planparallelen Wänden 13, 14 gerichtet ist.

Auf den oberen Flächen der Zungen 17 bzw. 18 sind Vertiefungen 21, 41 bzw. 22, 42 angeordnet. Die Zungen 17, 18 und ihre Vertiefungen sind in bezug auf die Längsachse (Y-Y) der Küvette 11 zueinander zentralsymmetrisch.

Wie aus Fig. 3 ersichtlich, sind die Mittelpunkte der Vertiefungen 21, 41 bzw. 22, 42 entlang einer Gerade angeordnet, die parallel zum äusseren Rand 23 bzw. 24 der Zunge 17 bzw. 18 liegt.

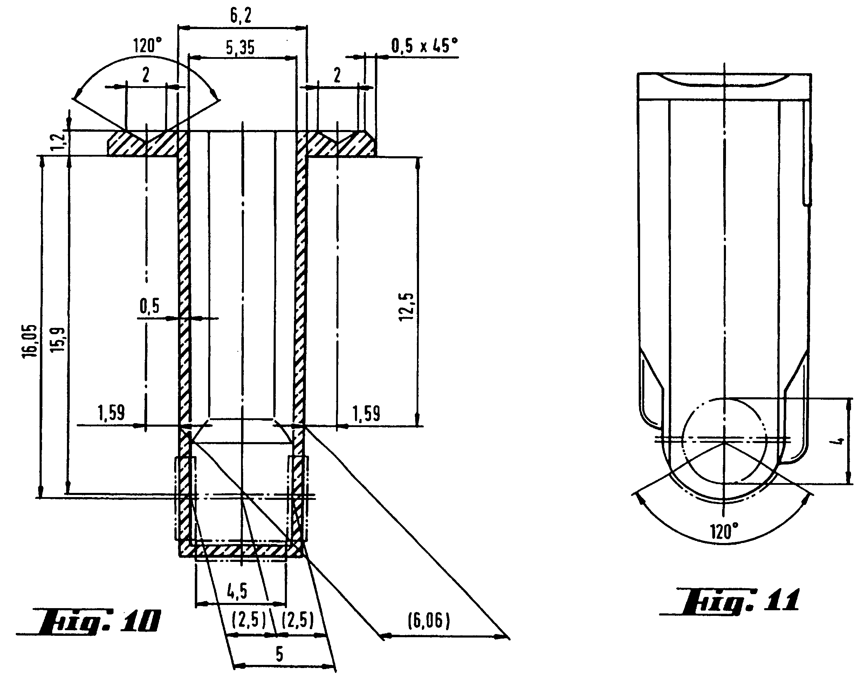

Wie aus Figur 6 ersichtlich, hat jede der Vertiefungen 21, 41 bzw. 22, 42 einen konischen Querschnitt. Die Vertiefungen 21 und 22 haben die gleiche Form und die gleichen Abmessungen. Die Vertiefungen 41 und 42 haben die gleiche Form und die gleichen Abmessungen. Die Vertiefungen 21, 41 bzw. 22, 42 ermöglichen der Transport der Küvette mit einem zu den Vertiefungen passenden Greifer. Die Abmessungen der Zungen 17 bzw. 18 und deren Vertiefungen werden so gewählt, dass eine sichere trennbare Verbindung Greifer/Küvette zustande kommt, wenn der Greifer die Küvette ergreift.

Wie aus Figur 3 ersichtlich, ist der obere Rand jeder der Vertiefungen 21 bzw. 22 kreisförmig, während der obere Rand jeder der Vertiefungen 41 bzw. 42 durch zwei Halbkreise gebildet ist, die durch kurze geradlinige Segmente verbunden sind. Diese Ausführung der Vertiefungen 41 bzw. 42 bringt mit sich den Vorteil, dass die ansonsten hohen Anforderungen an der Genauigkeit der Abmessungen des Greifers gesenkt werden können.

Der Durchmesser des oberen Rands jeder der Vertiefungen 21, 22, 41, 42 beträgt vorzugsweise annähernd die Hälfte der Abmessung der Zunge 17 bzw. 18 in der zu den planparallelen Wänden 13, 14 senkrechten Richtung. Diese Abmessung ist die Länge der Zunge gemessen zwischen dem offenen Ende 15 des rohrförmigen Körpers 12 der Küvette 11 und den äusseren Rand 23 bzw. 24 der Zunge 17 bzw. 18.

Die Tiefe jeder der Vertiefungen 21, 22, 41, 42 beträgt vorzugsweise annähernd die Hälfte der Abmessung der Zunge 17 bzw. 18 in der zu den planparallelen Wänden 13, 14 parallelen Richtung. Diese Abmessung ist die Dicke der Zunge.

Bei jeder Zunge 17, 18 enthält der Bereich zwischen den oberen Ränder ihrer Vertiefungen 21, 41 bzw. 22, 42 und dem äusseren Rand 23 bzw. 24 der Zunge vorzugsweise eine ebene Fläche 25, 26, die mit einer zur Längsachse Y-Y der Küvette senkrechten Ebene einen Winkel von annähernd 45° bildet.

Durch die oben beschriebene Ausbildung der Küvette 11 ist diese bestens dazu geeignet, von einem zangenförmigen, in den Zeichnungen nicht gezeigten Greifer einer Transportvorrichtung gefasst zu werden, der mittels eines Antriebs und einer entsprechenden Steuerung dazu eingerichtet ist, die Küvette bei einer vorbestimmten Entnahme-Position zu fassen, sie zu einer vorbestimmten Abgabeposition zu tragen und sie dort abzugeben.

Wenn die erfindungsgemässe Küvette zur Durchführung von spektralphotometrische Extinktionsmessungen eines darin enthaltenen Probe-Reagenz-Gemisches verwendet wird, verlauft der dazu verwendete Lichtstrahl durch den unteren Teil der planparallelen Wänden 13, 14, wobei dieser untere Teil an dem Boden 16 angrenzt. Der untere Bereich der planparallelen Wänden 13, 14, die als optische Messfenster benutzt werden, muss deshalb entsprechende optische Anforderungen erfüllen.

Da die erfindungsgemässe Küvette zur Durchführung ausserdem zur Durchführung von Fluoreszenz-Polarisationsmessungen verwendbar sein soll, und da bei solchen Messungen Licht gemessen wird, das die Küvette durch den Boden 16 verlässt, muss auch der Boden der Küvette entsprechende optische Anforderungen erfüllen.

Um die erwünschte Genauigkeit bei der Durchführung von Fluoreszenz-Polarisationsmessungen erreichen zu können, muss die Aenderung der Polarisationsrichtung, die durch die beteiligte optische Fenster (d.h. der beteiligte Portionen der planparallelen Wänden 13, 14 und des Bodens 16) verursacht wird, sehr klein sein. Um diese Eigenschaft zu erreichen, wird bei der Herstellung der Küvette durch Spritzgiessen die Position des Angusses in der Nähe vom obersten Rand der Küvette gewählt, d.h. möglichst weit vom unteren Teil der Küvette entfernt, wo sich die optische Messfenster befinden. Diese Wahl verursacht aber beim Verfahren zur Herstellung der Küvette einen Materialzusammenfluss, der die Entstehung von trüben Stellen in den planparallelen Wänden 13, 14 und im Boden 16 der Küvette verursacht, und der daher die Erzielung der gewünschten optischen Eigenschaften der optischen Messfenster in den planparallelen Wänden 13, 14 und des Bodens 16 der Küvette beeinträchtigt und ausserdem Probleme bei der Entlüftung während des Spritzgiessens verursacht.

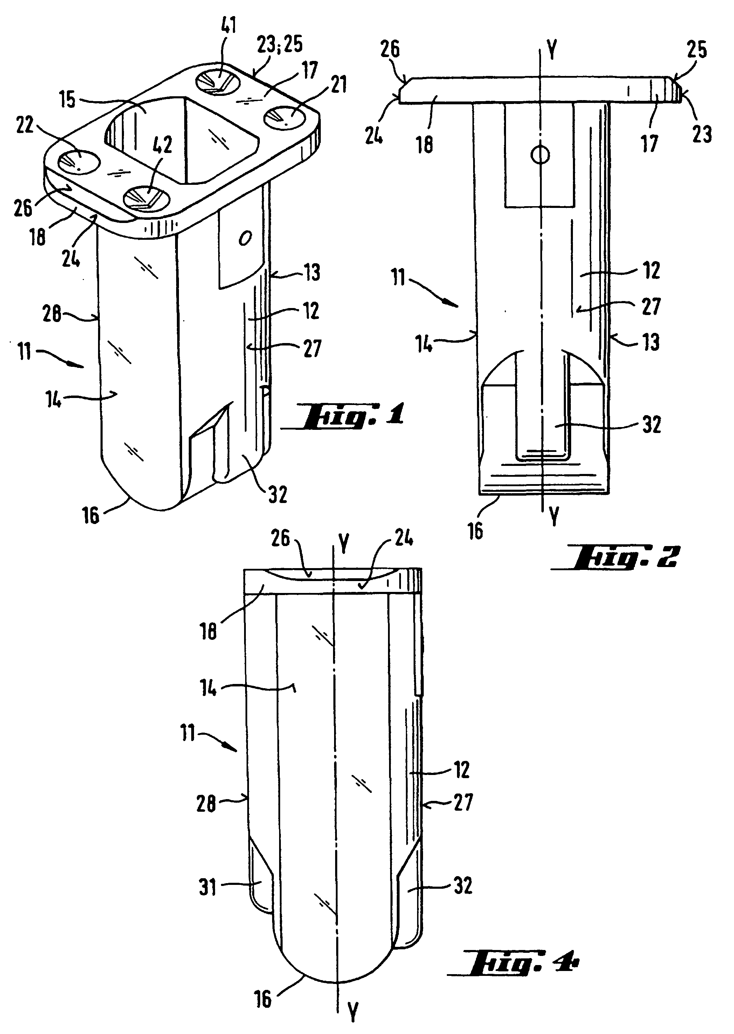

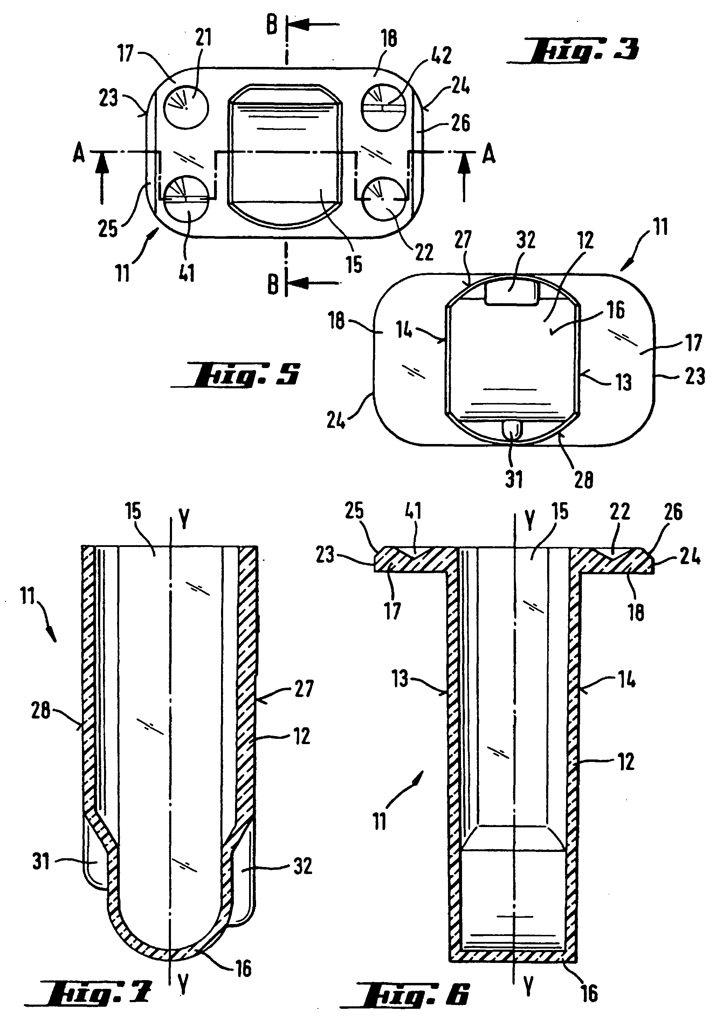

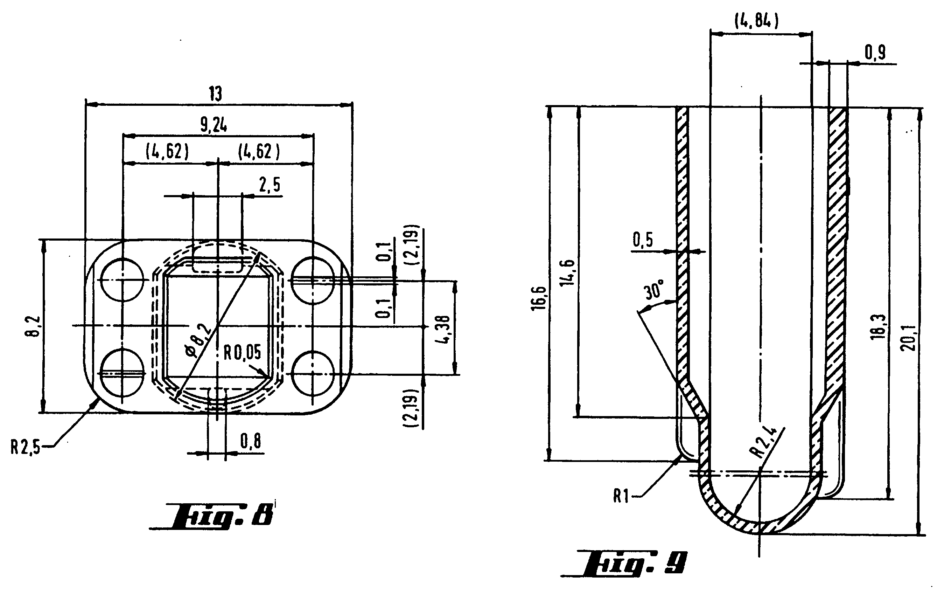

Diese Schwierigkeiten werden durch folgende Struktur der erfindungsgemässen Zelle beseitigt. Wie aus den Figuren 1,2,4,5 und 7 ersichtlich, hat der rohrförmige Körper 12 zwei Seitenwände 27, 28, die sich zwischen den planparallelen Wänden 13, 14 erstrecken, welche Seitenwände einen oberen Teil und einen unteren Teil haben, wobei der untere Teil an den Boden 16 angrenzt, und wobei der untere Teil jeder Seitenwand 27, 28 einen äusseren Steg 31, 32 enthält, der sich in länglichen Richtung der Küvette zwischen dem oberen Teil der Seitenwand und einem vom unterstem Punkt des Bodens 16 beabstandeten Punkt erstreckt.

Das Vorhandensein dieser Stege 31, 32 als Teil der Küvettenstruktur ermöglicht, den oben erwähnten, nachteiligen Effekt des Materialzusammenflusses während der Herstellung der Küvette durch Spritzgiessen zu vermeiden und dadurch die erforderlichen optischen Eigenschaften der optischen Messfenster in den planparallelen Wänden 13, 14 und des Bodens 16 zu erzielen, die die Küvette sowohl zur Durchführung von spektralphotometrischen Messungen als auch Fluoreszenz-Polarisationsmessungen geeignet machen.

Erfindungsgemäss werden besonders guten optischen Eigenschaften des Bodens 16 dadurch erreicht, dass der Steg 32 auf der Seitenwand 27, auf deren oberen Teil sich der Anguspunkt der Küvette befindet, länger und breiter als der Steg 31, der auf der gegenüberliegenden Seitenwand 28 liegt.

In einer bevorzugten Ausführungsform, die die in den Figuren 8 bis 11 gezeigten Abmessungen hat, hat der Steg 31 eine Breite von 0.8 mm wobei sein Abstand vom untersten Punkt des Bodens 16 in Richtung der Längsachse der Küvette 3.5 mm beträgt, während der Steg 32 eine Breite von 2.5 mm hat wobei sein Abstand vom untersten Punkt des Bodens 16 in Richtung der Längsachse der Küvette 1.8 mm beträgt.

Zur Erleichterung der Entlüftung beim Spritzgiessen der Küvette haben die Stege 31, 32 je einen länglichen, sehr feinen Spalt, der als Einsatztrennung dient. Dieser Spalt ist in den beiliegenden Figuren nicht dargestellt.

Wie aus Figuren 1, 4 und 7 ersichtlich, ist eine weitere bevorzugte Ausführungsform der erfindungsgemässen Küvette dadurch gekennzeichnet, dass der Boden 16 die Form eines Halbzylinders hat, der sich vom rohrförmigen Körper 12 nach aussen erstreckt.

Wenn die Küvette 11 in einem Analysengerät zur Durchführung klinisch chemischen Analysen benutzt wird, wird in die Küvette ein Probe-Reagenz-Gemisch eingeführt, das Teilchen in Suspension enthält.

Im Rahmen der Erfindung wird zur Durchführung elektro-optischer Analysen des Küvetteninhalts das in der Küvette enthaltene Probe-Reagenz-Gemisch durch die planparallelen Wände 13, 14 mit einem Lichtstrahl bestrahlt, der einen kreisförmigen Querschnitt hat. Diese Form des Querschnitts des verwendeten Lichtstrahls in Kombination mit der bevorzugten halbzylindrischen Form des Bodens 16 der Küvette ermöglicht, die Zahl der mit dem Lichtstrahl bestrahlten Teilchen zu maximieren. Dies ist insbesondere bei der zur Durchführung von Fluoreszenz-Polarisationsmessungen wichtig, weil dabei aus verschiedenen Gründen nur einen sehr kleinen Teil der mit dem Lichtstrahl bestrahlten fluoreszenten Teilchen zur Intensität des gemessenen Fluoreszenzlichtes beiträgt. Diese bevorzugte Ausführungsform ist daher insbesondere zur Durchführung von Fluoreszenz-Polarisationsmessungen geeignet, vor allem , wenn das Volumen des in der Küvette enthaltenen Probe-Reagenz-Gemisches sehr klein ist.

Figuren 8 bis 11 zeigen die Abmessungen in Millimeter von einer bevorzugten Ausführungsform der oben beschriebenen Küvette gemäss Fig. 1-7.

## Patentansprüche

1. Küvette (11) zur Durchführung optischer Messungen in einem automatischen Analysengerät, welche Küvette
a) ein aus einem lichtdurchlässigen Kunststoff in einem Stück geformtes Teil ist,
b) einen rohrförmigen Körper (12) hat, der zwei planparallele Wände (13, 14) besitzt, und der an einem Ende (15) offen und am entgegengesetzten Ende durch einen Boden (16) geschlossen ist, der die Form eines Halbzylinders hat,
c) der rohrförmige Körper (12) zwei Seitenwände (27, 28) hat, die sich zwischen den planparallelen Wänden (13, 14) erstrecken, welche Seitenwände einen oberen Teil und einen unteren Teil haben, wobei der untere Teil an den Boden (16) angrenzt, und wobei der untere Teil jeder Seitenwand (27, 28) einen äusseren Steg (31, 32) enthält, der sich in länglicher Richtung der Küvette zwischen dem oberen Teil der Seitenwand und einem vom Boden (16) beabstandeten Punkt erstreckt, und
d) jede der planparallelen Wände (13, 14) am offenen Ende (15) des Körpers eine Zunge (17, 18) hat, die unmittelbar an die planparallelen Wände (13, 14) anschliesst, sich vom Rand des offenen Endes (15) nach aussen erstreckt, und senkrecht zu den planparallelen Wänden (13, 14) gerichtet ist, wobei jede Zunge eine Vertiefung besitzt, und die Zungen und ihre Vertiefungen in bezug auf die Längsachse der Küvette zueinander symmetrisch sind,
**dadurch gekennzeichnet, dass**
der Steg (32) auf der Seitenwand (27), auf deren oberen Teil sich der Anguspunkt der Küvette befindet, länger und breiter als der Steg (31) ist, der auf der gegenüberliegenden Seitenwand (28) liegt.

2. Küvette gemäss Anspruch 1, **dadurch gekennzeichnet, dass** jede Zunge zwei Vertiefungen (21, 41 bzw. 22, 42) besitzt, deren Mittelpunkte entlang einer Gerade angeordnet sind, die parallel zum äusseren Rand (23 bzw. 24) der Zunge (17 bzw. 18) liegt..

3. Küvette gemäss Anspruch 1, **dadurch gekennzeichnet, dass** jede der Vertiefungen (21, 22, 41, 42) wenigstens annähernd eine kegelförmige Form hat.

4. Küvette gemäss Anspruch 1, **dadurch gekennzeichnet, dass** der Durchmesser des oberen Rands jeder Vertiefung (21, 22, 41, 42) annähernd die Hälfte der Abmessung der Zunge (17, 18) in der zu den planparallelen Wänden (13, 14) senkrechten Richtung beträgt.

5. Küvette gemäss Anspruch 1, **dadurch gekennzeichnet, dass** die Tiefe jeder Vertiefung (21, 22, 41, 42) annähernd die Hälfte der Abmessung der Zunge (17, 18) in der zu den planparallelen Wänden (13, 14) parallelen Richtung beträgt.

6. Küvette gemäss Anspruch 1, **dadurch gekennzeichnet, dass** bei jeder Zunge (17, 18) der Bereich zwischen den oberen Ränder ihrer Vertiefungen (21, 41 bzw. 22, 42) und dem äusseren Rand (23, 24) der Zunge eine ebene Fläche (25, 26) enthält, die mit einer zur Längsachse (Y-Y) der Küvette senkrechten Ebene einen Winkel von annähernd 45° bildet.

7. Küvette gemäss Anspruch 2, **dadurch gekennzeichnet, dass** der obere Rand einer der Vertiefungen (21 bzw. 22) kreisförmig ist, während der obere Rand der anderen Vertiefung (41 bzw. 42) durch zwei Halbkreise gebildet ist, die durch kurze geradlinige Segmente verbunden sind

## Claims

1. Cuvette (11) for carrying out optical measurements in an automated analyser where said cuvette
a) is a light-permeable plastic moulded in one piece,
b) has a tubular body (12) which has two plane-parallel walls (13, 14) and is open at one end (15) and is closed at the opposite end by a bottom (16) which has a semi-cylindrical shape,
c) the tubular body (12) has two side walls (27,28) which extend between the plane-parallel walls (13, 14), said side walls having an upper part and a lower part, the lower part adjoining the bottom (16) and the lower part of each side wall (27, 28) containing an outer rib (31, 32) extending in the longitudinal direction of the cuvette between the upper part of the side wall and a point spaced from the bottom (16), and
d) each of the plane-parallel walls (13, 14) has a tongue (17, 18) at the open end (15) of the body which directly joins the plane-parallel walls (13, 14), extends outwards from the edge of the open end (15) and is aligned perpendicular to the plane-parallel walls (13, 14), where each tongue has a depression, and the tongues and their depressions are symmetrical relative to one another in relation to the longitudinal axis of the cuvette,
**characterized in that**
the rib (32) on the side wall (27) on the upper part of which the moulding feed point of the cuvette is located, is longer and wider than the rib (31) located on the opposite side wall (28).

2. Cuvette as claimed in claim 1, **characterized in that** each tongue has two depressions (21, 41 and 22, 42 respectively) the central points of which are located along a straight line which is parallel to the outer edge (23 and 24 respectively) of the tongue (17 and 18 respectively).

3. Cuvette as claimed in claim 1, **characterized in that** each of the depressions (21, 22, 41, 42) has at least approximately a conical shape.

4. Cuvette as claimed in claim 1, **characterized in that** the diameter of the upper edge of each depression (21, 22, 41, 42) is approximately half the dimension of the tongue (17, 18) in the direction perpendicular to the plane-parallel walls ( 13, 14).

5. Cuvette as claimed in claim 1, **characterized in that** the depth of each depression (21, 22, 41, 42) is approximately half the dimension of the tongue (17, 18) in the direction parallel to the plane-parallel walls (13, 14).

6. Cuvette as claimed in claim 1, **characterized in that** the area between the upper edges of the depressions (21, 41 and 22, 42 respectively) of each tongue (17, 18) and the outer edge (23, 24) of the tongue contains a flat area (25, 26) which is at an angle of approximately 45° to a plane that is perpendicular to the longitudinal axis (Y-Y) of the cuvette.

7. Cuvette as claimed in claim 2, **characterized in that** the upper edge of one of the depressions (21 or 22) is circular whereas the upper edge of the other depression (41 or 42) is formed by two semicircles that are connected by short straight segments.

## Revendications

1. Cuvette (11) pour la réalisation de mesures optiques dans un appareil d'analyses, laquelle cuvette
a) est un élément monobloc en matière plastique translucide,
b) a un corps en forme de tuyau (12) possédant deux parois à faces planes et parallèles (13, 14) et ouvert à une extrémité (15) et
est fermé à l'extrémité opposée par un fond ayant la forme d'un demi-cylindre,
c) le corps en forme de tuyau (12) a deux parois latérales (27, 28) qui s'étendent entre les parois à faces planes et parallèles (13, 14), lesquelles parois latérales ont une partie supérieure et une partie inférieure, dans lesquelles la partie inférieure touche le fond et dans lesquelles la partie inférieure de chaque paroi latérale (27, 28) contient une traverse extérieure (31, 32) qui s'étend dans le sens oblong de la cuvette entre la partie supérieure de paroi latérale et un point incriminé à partir du fond (16),
d) chacune des parois à faces planes et parallèles (13, 14) a une languette (17, 18) à l'extrémité ouverte (15) du corps, qui raccorde directement aux parois à faces planes et parallèles (13, 14), s'étend vers l'extérieur à partir du bord de l'extrémité ouverte (15) et est orientée perpendiculairement aux parois à faces planes et parallèles (13, 14), sachant que chaque languette possède une cavité et que les languettes et leurs cavités sont symétriques les unes par rapport aux autres en ce qui concerne l'axe longitudinal de la cuvette,
**caractérisée en ce que**
la traverse (32) sur la paroi latérale (27), sur la partie supérieure de laquelle se trouve le point d'injection de la cuvette, est plus longue et plus large que la traverse (31), qui se trouve sur la paroi latérale opposée (28).

2. Cuvette selon la revendication 1, **caractérisé en ce que** chaque languette possède deux cavités (21, 41 ou 22, 42) dont les points centraux sont disposés le long d'une ligne droite parallèle au bord extérieur (23 ou 24) de la languette (17 ou 18).

3. Cuvette selon la revendication 1, **caractérisé en ce que** chacune des cavités (21, 22, 41, 42) a une forme au moins presque conique.

4. Cuvette selon la revendication 1, **caractérisé en ce que** le diamètre du bord supérieur de chaque cavité (21, 22, 41, 42) correspond à presque la moitié de la dimension de la languette (17, 18) dans le sens perpendiculaire aux parois à faces planes et parallèles (13, 14).

5. Cuvette selon la revendication 1, **caractérisé en ce que** la profondeur de chaque cavité (21, 22, 41, 42) correspond à presque la moitié de la dimension de la languette (17, 18) dans le sens perpendiculaire aux parois à faces planes et parallèles (13, 14).

6. Cuvette selon la revendication 1, **caractérisé en ce que** dans chaque languette (17, 18) la zone entre les bords supérieurs de leurs cavités (21, 22 ou 41, 42) et le bord extérieur (23, 24) de la languette comporte une surface plane (25, 26), qui forme un angle d'environ 45° avec une surface perpendiculaire à l'axe longitudinal (Y-Y) de la cuvette.

7. Cuvette selon la revendication 2, **caractérisé en ce que** le bord supérieur de l'une des cavités (21 ou 22) est circulaire alors que le bord supérieur de l'autre cavité (41 ou 42) est formé de deux demi-cercles reliés par de courts segments rectilignes.
